(19) Europäisches Patentamt
European Patent Office
Office européen des brevets

(11) **EP 4 670 907 A1**

(12) **EUROPEAN PATENT APPLICATION**
published in accordance with Art. 153(4) EPC

(43) Date of publication:
**31.12.2025   Bulletin 2026/01**

(21) Application number: **24784920.1**

(22) Date of filing: **02.04.2024**

(51) International Patent Classification (IPC):
**B23Q 15/18** (2006.01)    **B23Q 17/00** (2006.01)
**G05B 19/404** (2006.01)

(52) Cooperative Patent Classification (CPC):
**B23Q 15/18; B23Q 17/00; G05B 19/404**

(86) International application number:
**PCT/JP2024/013663**

(87) International publication number:
**WO 2024/210136 (10.10.2024 Gazette 2024/41)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **03.04.2023   JP 2023060357**

(71) Applicant: **Makino Milling Machine Co., Ltd.
Tokyo 152-8578 (JP)**

(72) Inventor: **SAKAGAMI, Akihiro
Aiko-gun, Kanagawa 243-0303 (JP)**

(74) Representative: **Harvey, Alexander James
Withers & Rogers LLP
2 London Bridge
London SE1 9RA (GB)**

(54) **MACHINE TOOL THERMAL DISPLACEMENT CORRECTION METHOD AND THERMAL DISPLACEMENT CORRECTION SYSTEM**

(57)    A thermal displacement correction method includes providing a calibration ball (44) affixed to a table (18), a probe (28) for measuring a position of the calibration ball (44), and thermometers (48a to 48d), setting a fixed coefficient in which a value obtained by integrating a temperature change amount corresponds to a thermal displacement of a position of the calibration ball (44), and a coefficient of variation to be multiplied by the fixed coefficient for weighting, simultaneously performing measurement of a position of the calibration ball (44) and the temperature change amount a plurality of repetitions during one period in which a temperature changes, calculating a plurality of predicted thermal displacement amounts Z by multiplying the product of the measured temperature change amount and the fixed coefficient by the plurality of coefficients of variation, identifying one coefficient of variation for which a difference of a change amount of the position of the calibration ball (44) in the one period is minimum from among the plurality of predicted thermal displacement amounts, and performing thermal displacement correction based on the predicted thermal displacement amount Z calculated from the fixed coefficient, the temperature change amount, and the identified coefficient of variation.

Fig. 1

$$Z = Za \times A + Zb \times B + Zc \times C + Zd \times D$$

## Description

FIELD

The present invention relates to a thermal displacement correction method and a thermal displacement correction system for a machine tool.

BACKGROUND

Thermal displacement occurs in machine tools due to internal heat generated by operation of the machine tool, machining heat, and changes in room temperature in the factory in which the machine tool is installed. Since such thermal displacement exerts an influence on the accuracy of the machined dimensions, it is desirable to minimize thermal displacement. Thus, in recent years, machine tools comprising thermal displacement correction systems have become widely available.

However, the external environment during the production of a machine tool is often different from the installation environment of the factory where the machine tool is actually used, and the thermal displacement correction system, which is set during production, may not be able to properly correct thermal displacement. In such cases, the thermal displacement correction system must be set again in the installation environment of the machine tool, resulting in a decrease in the efficiency of the machine tool and an increase in the number of operation steps and cost. Patent Literature 1 discloses a correction method for correcting thermal displacement using the temperature of a machine tool measured over 24 hours. In this method, a correction value is determined on the assumption that the thermal displacement is proportional to the temperature of the machine tool. However, it is unclear to what extent the thermal displacement that actually occurred is corrected.

[CITATION LIST]

[PATENT LITERATURE]

[PTL 1] Japanese Patent No. 5392540

SUMMARY

[TECHNICAL PROBLEM]

An object of the present invention is to provide a thermal displacement correction method and a thermal displacement correction system which can easily obtain optimal correction parameters with high accuracy in thermal displacement correction of a machine tool.

[SOLUTION TO PROBLEM]

According to the present invention, there is provided a thermal displacement correction method for a machine tool which is installed in an installation environment where temperature changes occur periodically, which moves a spindle to which a tool is attached and a table on which a workpiece is placed relative to each other, and which machines the workpiece with the tool, the method comprising the steps of providing a measurement reference affixed to the table, a position measurement device which is installed on the spindle of the machine tool for measuring a position of the measurement reference, and a thermometer attached to the machine tool, setting a fixed coefficient which is a constant, and in which a value obtained by integrating a temperature change amount corresponds to a thermal displacement amount of a position of the measurement reference, and a coefficient of variation, which is a variable to be multiplied by the fixed coefficient for weighting, and which is variable in a predetermined range, simultaneously performing measurement of a position of the measurement reference using the position measurement device and measurement of the temperature change amount using the thermometer a plurality of repetitions during one period in which a temperature change occurs in the installation environment, calculating a plurality of predicted thermal displacement amounts by multiplying a value obtained by multiplying the measured temperature change amount and the fixed coefficient by a plurality of the coefficient of variation, calculating a difference between a change amount of a measured position of the measurement reference in one period for the plurality of predicted thermal displacement amounts, and identifying the coefficient of variation when the difference is minimum, and performing thermal displacement correction during machining of the workpiece in the installation environment based on the predicted thermal displacement amount calculated in accordance with the product of the fixed coefficient, the temperature change amount, and the identified coefficient of variation..

According to the present invention, there is further provided a thermal displacement correction system for a machine tool which is installed in an installation environment where temperature changes occur periodically, which moves a spindle to which a tool is attached and a table on which a workpiece is placed relative to each other, and which machines the workpiece with the tool, the system comprising a measurement reference affixed to the table, a position measurement device which is installed on the spindle of the machine tool for measuring a position of the measurement reference, a thermometer attached to the machine tool, and a control part which is electrically connected to the position measurement device and the thermometer, and which is configured so as to operate the position measurement device and the thermometer in the installation environment to simultaneously perform measurement of a position of the measurement reference and a temperature change amount using the thermometer a plurality of repetitions during one period in which a temperature change occurs,

wherein the control part stores a fixed coefficient which is a preset constant, and in which a value obtained by integrating the temperature change amount corresponds to a thermal displacement of a position of the measurement reference, and a coefficient of variation, which is a preset variable to be multiplied by the fixed coefficient for weighting, and which is variable in a predetermined range, calculates a plurality of predicted thermal displacement amounts by multiplying a value obtained by multiplying the measured temperature change amount and the fixed coefficient by a plurality of the coefficient of variation, calculates a difference between a change amount of a measured position of the measurement reference in one period for the plurality of predicted thermal displacement amounts, and identify the coefficient of variation when the difference is minimum, and performs thermal displacement correction during machining of the workpiece in the installation environment based on the predicted thermal displacement amount calculated in accordance with the product of the fixed coefficient, the temperature change amount, and the identified coefficient of variation.

[ADVANTAGEOUS EFFECTS OF INVENTION]

According to the thermal displacement correction method and thermal displacement correction system of the present invention, the machine tool comprises a measurement reference which is affixed to a table, a position measurement device which is arranged on the spindle of the machine tool for measuring the position of the measurement reference, and a thermometer which is attached to the machine tool. Thus, in the installation environment in which temperature changes periodically occur, measurement of the position of the measurement reference using the position measurement device and measurement of the temperature change amount using the thermometer can simultaneously be performed a plurality of repetitions during one period in which the temperature change occurs. As a result, the relationship between the temperature change amount and the amount of change in the position of the measurement reference in the installation environment in which the machine tool actually operates can be understood. As a result, a coefficient of variation which reflects the influence of the installation environment can be determined.

Furthermore, according to the thermal displacement correction method and thermal displacement correction system of the present invention, a plurality of predicted thermal displacement amounts are calculated by multiplying the sum of the measured temperature change amount and fixed the coefficient by a plurality of coefficients of variation for weighting, and the difference thereof from these measured change amounts of the position of the measurement reference in one period is calculated, whereby the coefficient of variation when the difference is minimum can be identified. Thus, by correcting the change amount based on the predicted thermal displacement amount calculated from the identified coefficient of variation, the change amount due to thermal displacement can be minimized, whereby optimal thermal displacement correction can be performed. Furthermore, since the coefficient of variation can be identified by comparing the change amount at the position of the measured measurement reference with the temperature change amount, the user can easily and highly accurately determine the coefficient of variation for performing thermal displacement correction without relying on trial and error or empirical rules.

BRIEF DESCRIPTION OF DRAWINGS

FIG. 1 shows a side view of a machine tool comprising a thermal displacement correction system according to the present embodiment.
FIG. 2 shows a display example of a display according to the present embodiment.
FIG. 3 is a side view of a machine tool according to a modification example of the present embodiment.

DESCRIPTION OF EMBODIMENTS

A thermal displacement correction system for a machine tool according to an embodiment will be described below with reference to the attached drawings. Identical or corresponding elements have been assigned the same reference numerals, and duplicate descriptions thereof have been omitted. In order to facilitate understanding, the scales of the drawings may be changed.

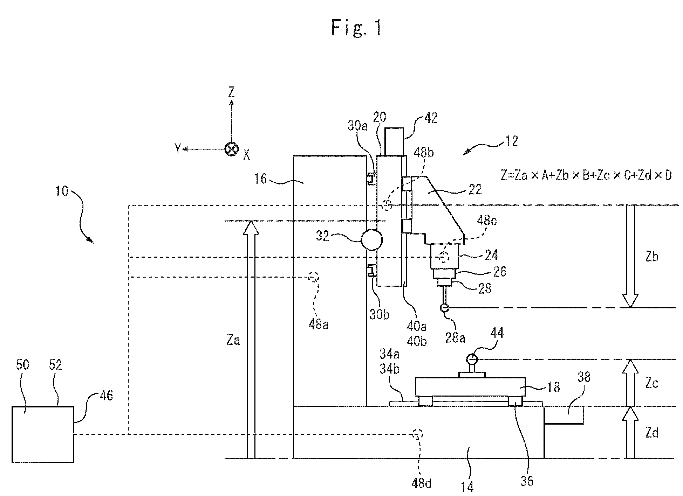

FIG. 1 shows a perspective view of a machine tool 12 comprising a thermal displacement correction system 10 according to the present embodiment. The machine tool 12 comprises a bed 14 serving as a pedestal, and a column 16 which stands on an upper surface of the bed 14. A table 18 for arrangement and affixation of a workpiece (illustration omitted) is arranged on the upper surface of the bed 14.
A saddle 20 is arranged on the front surface of the column 16, and a Z slider 22 is arranged on the front surface of the saddle 20. A spindle head 24 is arranged below the Z slider 22, and a spindle 26 which is configured so as to be rotatable about an axis parallel to the Z axis relative to the spindle head 24 is attached to a tip side, here the lower side, of the spindle head 24. The spindle 26 is configured so as to enable attachment and detachment of a tool (illustration omitted) for machining a workpiece while rotating together with the spindle 26.
A probe 28 serving as a position measurement device is attached to the tip side of the spindle 26. A contact part 28a which is capable of detecting contact with a measurement object is arranged on the tip of the probe 28. By acquiring the X-axis, Y-axis, and Z-axis positions when contact is detected, the position of the measurement object can be detected.

The machine tool 12 according to the present embodiment is configured so as to be capable of changing the relative position of the tool relative to the workpiece to be machined. The machine tool 12 has a machine coordinate system which is preset with a predetermined position as the origin, and includes an X-axis, a Y-axis, and a Z-axis as mutually orthogonal linear axes.

The machine tool 12 according to the present embodiment is vertical, and the Z axis extends along the vertical direction. The X and Y axes are set on a plane perpendicular to the Z axis, here a horizontal plane. In the machine tool 12 according to the present embodiment, the table 18 is configured so as to move along the Y axis direction (machine front-rear direction). The saddle 20 is configured so as to be movable along the X axis direction (machine left-right direction). Furthermore, the Z slider 22 is configured so as to be movable along the Z axis direction (machine up-down direction). As a result, the machine tool 12 is configured to relatively move the spindle 26 to which the tool (illustration omitted) is attached and the table 18 on which the workpiece (illustration omitted) is arranged along the X axis, Y axis, and Z axis.

The machine tool 12 comprises a pair of X-axis rails 30a, 30b which are formed on the front surface of the column 16 so as to move the tool and the workpiece relative to each other along the X-axis direction. The saddle 20 is attached to the X-axis rails 30a, 30b and configured so as to be capable of reciprocating along the X-axis direction. The machine tool 12 further comprises an X-axis motor 32 for moving the saddle 20 by means of a ball screw mechanism or the like. Thus, the spindle 26 can move along the X-axis direction together with the saddle 20.

The machine tool 12 comprises a pair of Y-axis rails 34a, 34b which are arranged on the upper surface of the bed 14 for moving the tool and the workpiece relatively along the Y-axis direction. The table 18 is supported by the Y-axis rails 34a, 34b via a guide block 36 and is configured so as to be able to reciprocate along the Y-axis direction. The machine tool 12 further comprises a Y-axis motor 38 for moving the table 18 along the Y-axis rails 34a, 34b.

The machine tool 12 comprises a pair of Z-axis rails 40a, 40b which are formed on the front surface of the saddle 20 for moving the tool and the workpiece relative to each other along the Z-axis direction. The Z slider 22 is attached to the Z-axis rails 40a, 40b and configured so as to be capable of reciprocating along the Z-axis direction. The machine tool 12 further comprises a Z-axis motor 42 for moving the Z slider 22 by means of a ball screw mechanism or the like. Thus, the tool and the spindle 26 can be moved along the Z-axis direction together with the spindle head 24. Furthermore, a drive motor (illustration omitted) for rotating the spindle 26 about an axis along the Z-axis direction is arranged inside the spindle head 24.

A calibration ball 44 is affixed to the upper surface of the table 18 as a measurement reference having a known radius. The thermal displacement correction system 10 comprises a control part 46 for operating the machine tool 12 so as to move the spindle 26 and the table 18 relative to each other. The control part 46 operates the machine tool 12 so as to move the probe 28 from a reference position to the calibration ball 44 on the table 18, and brings the contact part 28a of the probe 28 into contact with the calibration ball 44 from a plurality of directions. The position of the calibration ball 44 relative to the reference position can be obtained from the X-axis, Y-axis, and Z-axis positions at the time of contact. In the following description, the calibration ball 44 is used as the measurement reference, but the present invention is not limited thereto. The measurement reference may be a workpiece having known dimensions which is affixed to the table, a ring gauge having a known inner diameter, outer diameter, and height dimensions, a cylindrical object having a known radius and height dimensions, etc.

A plurality of thermometers, here four thermometers 48a, 48b, 48c, 48d, are arranged inside the machine tool 12. Specifically, the first thermometer 48a is arranged inside the column 16, and the second thermometer 48b is arranged inside the saddle 20. The third thermometer 48c is arranged inside the spindle head 24, and the fourth thermometer 48d is arranged inside the bed 14.

The four thermometers 48a, 48b, 48c, 48d are electrically connected to the control part 46 of the thermal displacement correction system 10, and are configured to store, i.e., record, measured temperature data in the storage part 50 of the thermal displacement correction system 10. The control part 46 is also electrically connected to the probe 28. Thus, the thermal displacement correction system 10 is configured such that the position data of the calibration ball 44 measured by the probe 28 is recorded in the storage part 50.

Further, the storage part 50 of the control part 46 is configured so as to be capable of recording in advance fixed coefficients Za, Zb, Zc, Zd and coefficients of variation A, B, C, D set by a user. The fixed coefficients Za, Zb, Zc, Zd are constants which are determined based on the shape of the machine tool 12 and the linear expansion coefficients of the members constituting the machine tool 12, and are constants (coefficients) in the case in which a value obtained by multiplying the temperature change amount corresponds to the change amount of the position of the calibration ball 44 caused by thermal displacement, and specifically, in which the change amount of the position of the calibration ball 44 is set as a function of the temperature change amount. The fixed coefficients are defined in X-axis direction, Y-axis direction, and Z-axis direction axial components, and the fixed coefficients Za, Zb, Zc, Zd shown in FIG. 1 represent the components in the Z-axis direction, and specifically, the axial direction of the spindle 26. The fixed coefficients Za, Zb, Zc, Zd are defined by being broken down into factors which influence the change amount. Specifically, they are broken down into the fixed coefficient Za, which the corresponds to the change amount caused by thermal displacement, i.e., expansion and contraction due to heat, of the column 16, the fixed coefficient Zb, which corresponds to the change amount caused by thermal expansion and contraction of the spindle 26, the fixed coefficient Zc, which corresponds to the change amount caused by thermal expansion and contraction of the table 18, and the fixed coefficient Zd, which corresponds to the change amount caused by thermal expansion and contraction of the bed 14. Thus, the predicted thermal displacement amount Z, which is the change amount of the position of the calibration ball 44 caused by thermal displacement, is calculated by summing the values obtained by multiplying each of these four fixed coefficients Za, Zb, Zc, Zd by the temperature change amount.

Furthermore, these four fixed coefficients Za, Zb, Zc, Zd are defined so as to be weighted and then summed because the degree of influence on the predicted thermal displacement amount Z may vary depending on the installation environment of the machine tool 12 and the usage status of the machine tool 12. Specifically, the predicted thermal displacement amount Z is calculated by summing the values obtained by multiplying the product of the four fixed coefficients Za, Zb, Zc, Zd and the temperature change amount by the four coefficients of variation A, B, C, D for weighting. Thus, as shown in FIG. 1, the predicted thermal displacement amount Z in the Z-axis direction can be calculated using the following formula:

$$Z = Za \times A + Zb \times B + Zc \times C + Zd \times D \qquad (1)$$

Note that in formula (1), for convenience, the fixed coefficients Za, Zb, Zc, Zd represent values which have been multiplied by the temperature change amount for conversion into those equivalent to the change amount of the position of the calibration ball 44. The four coefficients of variation A, B, C, D are variables which vary within predetermined ranges, and a plurality of values are set in advance, i.e., prepared, and recorded in the storage part 50 for each of the coefficients of variation A, B, C, D.

In the following description, the predicted thermal displacement amount Z in the Z-axis direction will primarily be described as a representative example, but the predicted thermal displacement amount X in the X-axis direction and the predicted thermal displacement amount Y in the Y-axis direction can also be treated in the same manner as the predicted thermal displacement amount Z in the Z-axis direction and can be calculated using the following formulas:

$$X = Xa \times E + Xb \times F + Xc \times G + Xd \times H \qquad (2)$$

$$Y = Ya \times I + Yb \times J + Yc \times K + Yd \times L \qquad (3)$$

The fixed coefficients Xa, Xb, Xc, Xd and the fixed coefficients Ya, Yb, Yc, Yd are respective fixed coefficients corresponding to the change amount in the X-axis direction and the Y-axis direction caused by the expansion and contraction of the column 16, the spindle 26, the table 18, and the bed 14 due to heat, and the coefficients of variation E, F, G, H and the coefficients of variation I, J, K, L are coefficients of variation corresponding to the fixed coefficients Xa, Xb, Xc, Xd and the fixed coefficients Ya, Yb, Yc, Yd, respectively. Further, in the manner of formula (1), for formulas (2) and (3), for convenience, the fixed coefficients Xa, Xb, Xc, Xd and the fixed coefficients Ya, Yb, Yc, Yd represent values which have been multiplied by the temperature change amount for conversion into those equivalent to the change amount of the position of the calibration ball 44.

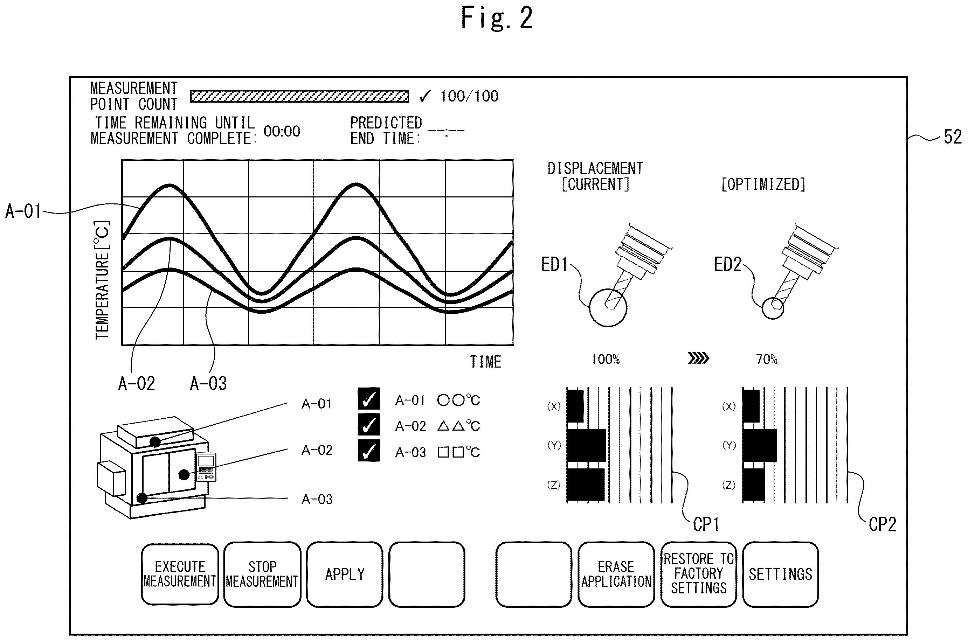

As shown in FIGS. 1 and 2, the thermal displacement correction system 10 comprises a display 52 which is electrically connected to the control part 46 and the storage part 50. FIG. 2 shows a display example of the display 52. The display 52 shows the change over time (time series) of temperature at temperature measurement positions A-01, A-02, and A-03 of the machine tool 12. The position and temperature of the calibration ball 44 are measured over a plurality of periods, with one period being 24 hours, i.e., over several days. The reason why one period is set to 24 hours is to appropriately consider the effect of changes in the external environment, such as changes in temperature between day and night, on thermal displacement, as shown in the drawing, and by performing this for a plurality of consecutive periods (several days), the reliability of the measurement data can be improved.

FIG. 2 also displays a change amount ED1 of the position of the calibration ball 44 in one period as measured by the probe 28, and a bar graph CP1 of the X-axis, Y-axis, and Z-axis components of the change amount ED1. In order to facilitate visual recognition, the displacement amount ED1 in the display 52 is displayed as a circle having a radius equivalent to the displacement amount ED1 on the image of the measurement device, rather than as a numerical value. Furthermore, the display 52 displays a corrected change amount ED2 obtained by correcting the displacement amount ED1 using one of multiple sets of coefficients of variation A to L recorded in the storage part 50, and a bar graph CP2 of the X-axis, Y-axis, and Z-axis components of the corrected change amount ED2. The corrected change amount ED2 is calculated by calculating the predicted thermal displacement amount Z from the product of one of the multiple sets of coefficients of variation A, B, C, D set in advance and recorded in the storage part 50, the fixed coefficients Xa to Xd, Ya to Yd, and Za to Zd, and the measured temperature change amount, and subtracting this from the displacement amount ED1. In order to facilitate visual recognition, the corrected change amount ED2 in the display 52 is displayed as a circle having a radius equivalent to the corrected change amount ED2 on the image of the measurement device, rather than as a numerical value. Thus, the user can easily identify one set of coefficients of variation A to L for optimally performing thermal displacement correction from among the plurality of sets of coefficients of variation A to L based on the change amount ED1 and corrected change amount ED2 displayed on the display 52.

Next, the thermal displacement correction method and the mode of operation and effects of the thermal displacement correction system 10 will be explained via description of thermal displacement correction using the thermal displacement correction system 10 according to the present embodiment.

According to the thermal displacement correction system 10 of the present embodiment, measurement of the position of the calibration ball 44 using the probe 28 and measurement of the temperature change amount using the thermometers 48a, 48b, 48c, 48d can be simultaneously performed in the installation environment of the machine tool 12 at a plurality of times selected by the user so as to understand the influence of temperature change during a 24-hour period defined as one period.

In addition, by calculating a plurality of predicted thermal displacement amounts Z by multiplying the product of the measured temperature change amount and fixed coefficients Za, Zb, Zc, Zd by the plurality of sets of coefficients of variation A, B, C, D, respectively, and calculating the difference between each of the plurality of predicted thermal displacement amounts Z and the measured change amount of the position of the calibration ball 44 in one period, one set of coefficients of variation A, B, C, D where the difference is minimum can be identified.

Furthermore, thermal displacement correction during machining of a workpiece (illustration omitted) in the installation environment can be performed based on a predicted thermal displacement amount Z calculated by the product of the fixed coefficients Za, Zb, Zc, Zd, the temperature change amount, and the identified set of coefficients of variation A, B, C, D.

According to the thermal displacement correction method and thermal displacement correction system 10 of the present embodiment, the machine tool 12 comprises the calibration ball 44, which is affixed to the table 18, the probe 28, which is arranged along the axis of the spindle 26 of the machine tool 12 for measuring the position of the calibration ball 44, and the thermometers 48a, 48b, 48c, 48d, which are attached to the machine tool 12. Thus, in an installation environment in which temperature changes occur periodically, measurement of the position of the calibration ball 44 using the probe 28 and measurement of the temperature change amount using the thermometers 48a, 48b, 48c, 48d can be performed simultaneously a plurality of repetitions during a 24-hour period in which temperature changes occur. As a result, the relationship between the temperature change amount and the amount of change in the position of the calibration ball 44 in the installation environment in which the machine tool 12 actually operates can be understood. This makes it possible to determine one set of coefficients of variation A, B, C, D which reflect the influence of the installation environment.

Furthermore, according to the thermal displacement correction method and thermal displacement correction system 10 of the present embodiment, by calculating the plurality predicted thermal displacement amounts Z by multiplying the sum of the measured temperature change amount and the fixed coefficients Za, Zb, Zc, Zd by a plurality of sets of coefficients of variation A, B, C, D for weighting, and calculating the difference between these amounts and the measured change amount of the position of the calibration ball 44 in one period, one set of coefficients of variation A, B, C, D for which the difference is minimum can be identified. Thus, by correcting the change amount based on the predicted thermal displacement amount Z calculated from the identified set of coefficients of variation A, B, C, D, the change amount due to thermal displacement can be minimized, whereby optimal thermal displacement correction can be performed. Furthermore, since the coefficients of variation A, B, C, D can be identified by comparing the measured change amount in the position of the calibration ball 44 with the temperature change amount, the user can easily and highly accurately determine a single set of coefficients of variation A, B, C, D for performing thermal displacement correction without relying on trial and error or empirical rules.

Further, according to the thermal displacement correction method and thermal displacement correction system 10 of the present embodiment, the thermometers 48a, 48b, 48c, 48d are attached to a plurality of locations on the machine tool 12. Thus, the temperature change amount can be measured at locations close to the column 16, the saddle 20, the spindle head 24, the bed 14, etc., where thermal displacement is relatively likely to occur, whereby the correlation between the temperature change amount and the change amount can accurately be understood. As a result, one set of coefficients of variation A, B, C, D which is optimal for performing thermal displacement correction can be obtained with high accuracy.

Furthermore, according to the thermal displacement correction method and thermal displacement correction system 10 of the present embodiment, the position of the calibration ball 44, the dimensions of which are known and which is affixed to the table 18, can be measured using the probe 28 attached to the spindle 26. As a result, the position of the calibration ball 44 can be measured with high accuracy, whereby the effect of the thermal displacement of the machine tool 12 on the position measurement of the calibration ball 44 can be understood with high accuracy. As a result, one set of coefficients of variation A, B, C, D which is optimal for performing thermal displacement correction can be obtained with high accuracy.

Furthermore, according to the thermal displacement correction method and thermal displacement correction system 10 of the present embodiment, one period in which measurement is performed is 24 hours, and measurement of the position of the calibration ball 44 and the temperature change amount is performed over that one period or over a plurality of periods. Thus, the correlation between the temperature change amount and the change amount can be accurately understood, taking into account the influence of temperature fluctuations every 24 hours. As a result, one set of coefficients of variation A, B, C, D which is optimal for performing thermal displacement correction can be obtained with high accuracy.

According to the thermal displacement correction method and thermal displacement correction system 10 of the present embodiment, the machine tool 12 comprises the storage part 50 for storing data of the fixed coefficients Za, Zb, Zc, Zd and the plurality of sets of coefficients of variation A, B, C, D. There is further provided the display 52, which is electrically connected to the storage part 50 for displaying the change amount of the measured position of the calibration ball 44 in one period, here 24 hours, and the corrected change amount when the change amount is corrected based on the predicted thermal displacement amount Z calculated using one set of coefficients of variation A, B, C, D selected from the plurality of sets of coefficients of variation A, B, C, D. Thus, the user can identify one set of coefficients of variation A, B, C, D from the plurality of sets of coefficients of variation A, B, C, D based on the change amount ED1 and the corrected change amount ED2 displayed on the display 52. As a result, a single set of coefficients of variation A, B, C, D which is optimal for performing thermal displacement correction can easily be obtained.

As described above, the thermal displacement correction system 10 according to the present embodiment can easily obtain optimal coefficients of variations A, B, C, D with high accuracy in thermal displacement correction of the machine tool 12.

(Modification Example)

A modification example of the thermal displacement correction system 10 according to the present embodiment will be described below. Elements which are identical or which correspond to those of the present embodiment have been assigned the same reference signs, and duplicate description thereof has been omitted.

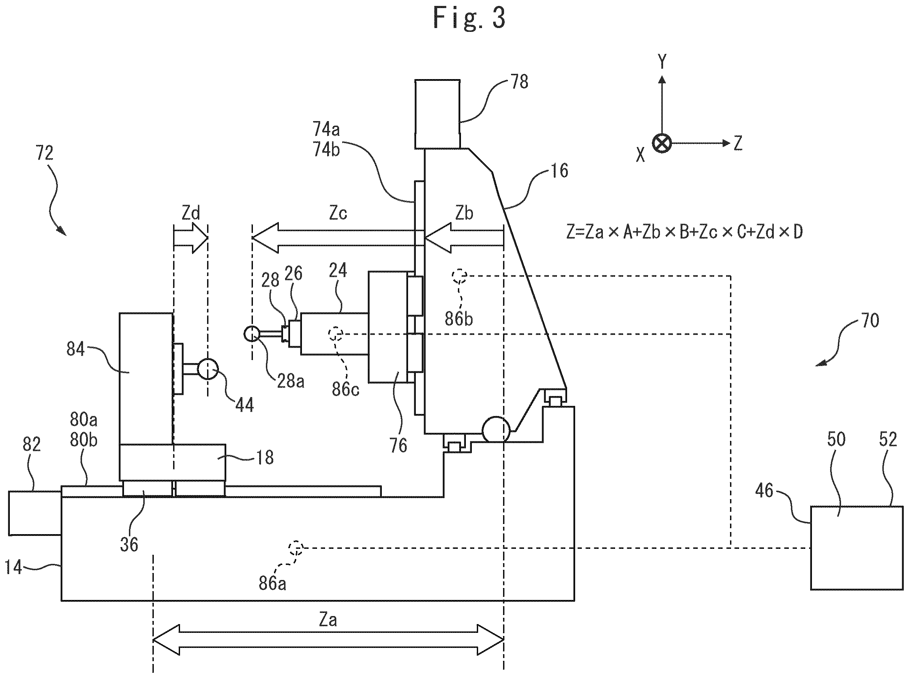

As shown in FIG. 3, in a thermal displacement correction system 70 according to a modification example, the machine tool 72 is horizontal, the axial direction (Z-axis direction) of the spindle 26 extends along the machine front-rear direction, and the vertical direction is the Y-axis direction. Thus, the X-axis and Z-axis are set on a plane perpendicular to the Y-axis, here a horizontal plane.

A pair of Y-axis rails 74a, 74b are formed on the front surface of the column 16, and a slider 76 is attached to the Y-axis rails 74a, 74b so as to be capable of sliding along the Y-axis direction. The machine tool 72 further comprises a Y-axis motor 78 for moving the slider 76 along the Y-axis direction by means of a ball screw mechanism or the like. Furthermore, the column 16 is configured so as to be capable of sliding along the X-axis direction by an unillustrated X-axis motor. Thus, the slider 76 is configured so as to be capable of sliding along the Y-axis direction (vertical direction) and the X-axis direction (machine left-right direction). As a result, the spindle head 24 and the spindle 26, the axes of which extend along the Y-axis direction, are configured so as to be capable of sliding along the Y-axis direction (vertical direction) and the X-axis direction (machine left-right direction) in accordance with the sliding of the slider 76.

The machine tool 72 comprises a pair of Z-axis rails 80a, 80b which are arranged on the upper surface of the bed 14 for moving the tool and the workpiece relatively along the Z-axis direction. The table 18 is supported by the Z-axis rails 80a, 80b via the guide block 36 and is configured so as to be capable of reciprocating along the Z-axis direction. The machine tool 72 further comprises a Z-axis motor 82 for moving the table 18 along the Z-axis rails 80a, 80b.

An angle plate 84 is provided on the upper surface of the table 18, and the calibration ball 44 is affixed to the side of the angle plate 84 facing the spindle 26 in the Z-axis direction. The calibration ball 44 is affixed so as to face toward the probe 28.

A plurality of thermometers, here three thermometers 86a, 86b, 86c, are arranged inside the machine tool 72. The first thermometer 86a is arranged inside the bed 14, the second thermometer 86b is arranged inside the column 16, and the third thermometer 86c is arranged inside the spindle head 24. The three thermometers 86a, 86b, 86c are electrically connected to the control part 46 of the thermal displacement correction system 10 and are configured so as to record measured temperature data in the storage part 50 of the thermal displacement correction system 10.

According to the thermal displacement correction method and thermal displacement correction system 70 of the present embodiment, by calculating the plurality of predicted thermal displacement amounts Z by multiplying the sum of the measured temperature change amount and the fixed coefficients Za, Zb, Zc, Zd by multiple sets of coefficients of variation A, B, C, D for weighting, and calculating the difference between these amounts and the measured change amount in the position of the calibration ball 44 in one period, a set of coefficients of variation A, B, C, D for which the difference is minimum can be identified. Thus, by correcting the change amount based on the predicted thermal displacement amount Z calculated from the identified set of coefficients of variation A, B, C, D, the change amount due to thermal displacement can be minimized, whereby optimal thermal displacement correction can be performed. Furthermore, since a single set of coefficients of variation A, B, C, D can be identified by comparing the measured change amount in the position of the calibration ball 44 with the temperature change amount, the user can easily and highly accurately determine a single set of coefficients of variation A, B, C, D for performing thermal displacement correction without relying on trial and error or empirical rules.

Though the embodiments of the thermal displacement correction system 10, 70 of the machine tool 12, 72 has been described above, the present invention is not limited to the above embodiments. Various modifications of the above embodiments are included in the embodiment of the present invention within the scope that those skilled in the art could conceive of.

DESCRIPTION OF REFERENCE SIGNS

| 10 | thermal displacement correction system |
| 12 | machine tool |
| 18 | table |
| 26 | spindle |
| 28 | probe (position measurement device) |
| 44 | calibration ball (measurement reference) |
| 46 | control part |
| 48a | first thermometer |
| 48b | second thermometer |
| 48c | third thermometer |
| 48d | fourth thermometer |
| 50 | storage part |
| 52 | display |
| 70 | thermal displacement correction system |
| 72 | machine tool |
| 86a | first thermometer |
| 86b | second thermometer |
| 86c | third thermometer |
| A to D | coefficient of variation |
| E to H | coefficient of variation |
| I to L | coefficient of variation |
| ED1 | change amount |
| ED2 | corrected change amount |
| Xa to Xd | fixed coefficient |
| Ya to Yd | fixed coefficient |
| Za to Zd | fixed coefficient |
| Z | predicted thermal displacement amount |

**Claims**

1. A thermal displacement correction method for a machine tool which is installed in an installation environment where temperature changes occur periodically, which moves a spindle to which a tool is attached and a table on which a workpiece is placed relative to each other, and which machines the workpiece with the tool, the method comprising the steps of:

providing a measurement reference affixed to the table, a position measurement device which is installed on the spindle of the machine tool for measuring a position of the measurement reference, and a thermometer attached to the machine tool,
setting a fixed coefficient which is a constant, and in which a value obtained by integrating a temperature change amount corresponds to a thermal displacement amount of a position of the measurement reference, and a coefficient of variation, which is a variable to be multiplied by the fixed coefficient for weighting, and which is variable in a predetermined range,
simultaneously performing measurement of a position of the measurement reference using the position measurement device and measurement of the temperature change amount using the thermometer a plurality of repetitions during one period in which a temperature change occurs in the installation environment,
calculating a plurality of predicted thermal displacement amounts by multiplying a value obtained by multiplying the measured temperature change amount and the fixed coefficient by a plurality of the coefficients of variation,
calculating a difference between a change amount of a measured position of the measurement reference in one period for the plurality of predicted thermal displacement amounts, and identifying the coefficient of variation when the difference is minimum, and
performing thermal displacement correction during machining of the workpiece in the installation environment based on the predicted thermal displacement amount calculated in accordance with the product of the fixed coefficient, the temperature change amount, and the identified coefficient of variation.

2. The thermal displacement correction method according to claim 1, further comprising the step of attaching a plurality of the thermometers to a plurality of locations of the machine tool.

3. The thermal displacement correction method according to claim 2, wherein the measurement reference is constituted by any of a surface of the workpiece, an upper surface and an inner peripheral surface of an object having a ring-like shape, a surface of a spherical object, and an upper surface and an outer peripheral surface of a cylindrical object, and the position measurement device is a probe held by the spindle.

**4.** The thermal displacement correction method according to claim 3, wherein the one period is 24 hours, and measurement of a position of the measurement reference and the temperature change amount is performed over the one period or a plurality of periods.

**5.** The thermal displacement correction method according to any one of claims 1 to 4, further comprising the steps of:

providing the machine tool with a storage part for storing data of the fixed coefficient and the plurality of coefficients of variation,
displaying, on a display connected to the storage part, the change amount of the measured position of the measurement reference in the one period and a corrected change amount obtained by correcting the change amount based on the predicted thermal displacement amount calculated using one coefficient of variation selected from the plurality of coefficients of variation, and
identifying, by a user, one of the plurality of coefficients of variation based on the displayed change amount and the corrected change amount.

**6.** A thermal displacement correction system for a machine tool which is installed in an installation environment where temperature changes occur periodically, which moves a spindle to which a tool is attached and a table on which a workpiece is placed relative to each other, and which machines the workpiece with the tool, the system comprising:

a measurement reference affixed to the table,
a position measurement device which is installed on the spindle of the machine tool for measuring a position of the measurement reference,
a thermometer attached to the machine tool, and
a control part which is electrically connected to the position measurement device and the thermometer, and which is configured so as to operate the position measurement device and the thermometer in the installation environment to simultaneously perform measurement of a position of the measurement reference and a temperature change amount using the thermometer a plurality of repetitions during one period in which a temperature change occurs, wherein the control part:

stores a fixed coefficient which is a preset constant, and in which a value obtained by integrating the temperature change amount corresponds to a thermal displacement of a position of the measurement reference, and a coefficient of variation, which is a preset variable to be multiplied by the fixed coefficient for weighting, and which is variable in a predetermined range,
calculates a plurality of predicted thermal displacement amounts by multiplying a value obtained by multiplying the measured temperature change amount and the fixed coefficient by a plurality of the coefficient of variation,
calculates a difference between a change amount of a measured position of the measurement reference in one period for the plurality of predicted thermal displacement amounts, and identifies the coefficient of variation when the difference is minimum, and
performs thermal displacement correction during machining of the workpiece in the installation environment based on the predicted thermal displacement amount calculated in accordance with the product of the fixed coefficient, the temperature change amount, and the identified coefficient of variation.

**7.** The thermal displacement correction system according to claim 6, wherein the thermometer is attached to a plurality of locations of the machine tool.

**8.** The thermal displacement correction system according to claim 7, the measurement reference is constituted by any one of a surface of the workpiece, an upper surface and an inner peripheral surface of a ring-shaped object, a surface of a spherical object, and an upper surface and an outer peripheral surface of a cylindrical object, and the position measurement device is a probe held by the spindle.

**9.** The thermal displacement correction system according to claim 8, wherein the one period is 24 hours, and measurement of a position of the measurement reference and the temperature change amount is performed over the one period or a plurality of periods.

**10.** The thermal displacement correction system according to any one of claims 6 to 9, wherein the machine tool comprises:

a storage part for storing data of the fixed coefficient and the plurality of coefficients of variation,
a display which is electrically connected to the storage part, and which is for displaying the change amount of the measured position of the measurement reference in the one period and a corrected change amount obtained by correcting the change amount based on the predicted thermal displacement amount calculated using one coefficient of variation selected from the plurality of coefficients of variation, wherein

a user can identify one of the plurality of coefficients of variation from among the plurality of coefficients of variation based on the displayed change amount and the corrected change amount.

Fig. 1

$$Z = Za \times A + Zb \times B + Zc \times C + Zd \times D$$

Fig. 2

# Fig. 3

$$Z = Za \times A + Zb \times B + Zc \times C + Zd \times D$$

EP 4 670 907 A1

# INTERNATIONAL SEARCH REPORT

| International application No. |
| --- |
| **PCT/JP2024/013663** |

**A. CLASSIFICATION OF SUBJECT MATTER**

*B23Q 15/18*(2006.01)i; *B23Q 17/00*(2006.01)i; *G05B 19/404*(2006.01)i
FI:    B23Q15/18; B23Q17/00 A; G05B19/404 K

According to International Patent Classification (IPC) or to both national classification and IPC

**B. FIELDS SEARCHED**

Minimum documentation searched (classification system followed by classification symbols)

B23Q15/00-15/28; B23Q17/00; G05B19/404

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2020-059072 A (MURATA MACHINERY LTD.) 16 April 2020 (2020-04-16) paragraphs [0018], [0025], [0048], [0050], [0060], [0068] | 1-10 |
| A | JP 2017-170532 A (OKUMA CORPORATION) 28 September 2017 (2017-09-28) | 1-10 |
| A | JP 2019-025552 A (FANUC CORPORATION) 21 February 2019 (2019-02-21) | 1-10 |
| A | JP 2017-024108 A (FANUC CORPORATION) 02 February 2017 (2017-02-02) | 1-10 |
| A | JP 2015-217469 A (MAKINO MILLING MACH. CO., LTD.) 07 December 2015 (2015-12-07) | 1-10 |
| A | JP 2006-281335 A (OKUMA CORPORATION) 19 October 2006 (2006-10-19) | 1-10 |
| A | JP 2005-052917 A (KITAMURA MACH. CO., LTD.) 03 March 2005 (2005-03-03) | 1-10 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **24 May 2024** | **11 June 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

**INTERNATIONAL SEARCH REPORT**
Information on patent family members

International application No.

**PCT/JP2024/013663**

| Patent document cited in search report | | | Publication date (day/month/year) | Patent family member(s) | | | Publication date (day/month/year) |
|---|---|---|---|---|---|---|---|
| JP | 2020-059072 | A | 16 April 2020 | (Family: none) | | | |
| JP | 2017-170532 | A | 28 September 2017 | (Family: none) | | | |
| JP | 2019-025552 | A | 21 February 2019 | US | 2019/0033820 | A1 | |
| | | | | DE | 102018005858 | A1 | |
| | | | | CN | 109308051 | A | |
| JP | 2017-024108 | A | 02 February 2017 | US | 2017/0023417 | A1 | |
| | | | | DE | 102016112922 | A1 | |
| | | | | CN | 106371404 | A | |
| JP | 2015-217469 | A | 07 December 2015 | (Family: none) | | | |
| JP | 2006-281335 | A | 19 October 2006 | US | 2006/0218811 | A1 | |
| | | | | DE | 102006013767 | A1 | |
| JP | 2005-052917 | A | 03 March 2005 | (Family: none) | | | |

Form PCT/ISA/210 (patent family annex) (July 2022)

# EP 4 670 907 A1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5392540 B